# FASCICULE DE BREVET EUROPEEN

(11) **EP 3 021 030 B1**
(45) Date de publication et mention de la délivrance du brevet: **22.03.2017**
(21) Numéro de dépôt: 15186183.8
(22) Date de dépôt: 22.09.2015
(51) Int. Cl.: F16N 29/00

(54) **PROCEDE ET DISPOSITIF DE LUBRIFICATION A FIABILITE AUGMENTEE A DOUBLE CIRCUIT D'UNE BOITE DE TRANSMISSION PRINCIPALE DE PUISSANCE D'UN AERONEF**
SCHMIERVERFAHREN UND -VORRICHTUNG MIT VERBESSERTER ZUVERLÄSSIGKEIT MIT DOPPELKREISLAUF EINES HAUPTLEISTUNGSÜBERTRAGUNGSGETRIEBES EINES LUFTFAHRZEUGS
A DUAL CIRCUIT LUBRICATION METHOD AND DEVICE WITH INCREASED RELIABILITY FOR A MAIN POWER TRANSMISSION GEARBOX OF AN AIRCRAFT

(30) Priorité: 31.10.2014 FR 1402464
(43) Date de publication de la demande: 18.05.2016
(73) Titulaire: Airbus Helicopters, 13725 Marignane Cedex (FR)
(72) Inventeur: HARREAU, Jean-Guy, 13127 VITROLLES (FR)
(74) Mandataire: Pouillot, Laurent Pierre Paul

(56) Documents cités:
- EP-A1- 0 443 901
- FR-A1- 2 826 094
- US-A- 4 976 335
- US-A1- 2010 229 823
- US-A1- 2013 306 022

## Description

La présente invention se rapporte au domaine de la lubrification des boîtes de transmission, en particulier des boîtes de transmission destinées à un aéronef à voilure tournante.

La présente invention concerne un procédé et un dispositif de lubrification à fiabilité augmentée à double circuit d'un système mécanique. Ce procédé et ce dispositif de lubrification sont particulièrement adaptés à la lubrification d'une boîte de transmission principale de puissance d'un aéronef à voilure tournante.

Un système mécanique comporte généralement des éléments tournants, tels que des arbres et des roulements, ainsi que des éléments de transmission de puissance et de réduction ou d'augmentation de vitesse, tels que des pignons et/ou des engrenages. Il est alors essentiel pour le bon fonctionnement du système mécanique de lubrifier et de refroidir ces éléments par exemple par de l'huile sous pression. Cette lubrification est en général assurée par un circuit de lubrification et a pour fonctions principales de limiter l'usure et l'échauffement de ces éléments du système mécanique et, par suite, de prolonger la durée de vie du système mécanique. Sans une telle lubrification, le fonctionnement du système mécanique peut être rapidement dégradé, voire impossible.

Suite à cette lubrification du système mécanique, l'huile circulant dans le circuit de lubrification peut être parfois très chaude et alors refroidie dans un circuit de refroidissement généralement extérieur au système mécanique avant d'être de nouveau utilisable pour la lubrification du système mécanique. Ce circuit de refroidissement comporte un échangeur thermique, par exemple un échangeur thermique huile/air.

Ce circuit de refroidissement extérieur au système mécanique constitue une partie vulnérable d'un circuit de lubrification de ce système mécanique en ce qui concerne les fuites. En effet, ce circuit de refroidissement comporte des conduites, de nombreux raccords et l'échangeur thermique. Ce circuit de refroidissement est alors soumis à des contraintes thermiques, telles qu'une différence importante entre la température de l'huile et la température extérieure, et à des contraintes vibratoires générées par le système mécanique et/ou un véhicule utilisant ce système mécanique. De plus, ce circuit de refroidissement est exposé à l'extérieur du système mécanique. Notamment lorsque ce système mécanique équipe un aéronef, ce circuit de refroidissement est situé à l'extérieur du système mécanique de l'aéronef, par exemple sous un capot. Il peut cependant être ainsi exposé aux chocs avec des oiseaux ou bien avec de la glace par exemple. De fait, une ou plusieurs fuites peuvent apparaître au niveau de ces raccords et de ces conduites ainsi qu'au niveau de l'échangeur thermique, ces fuites étant essentiellement provoquées par ces contraintes vibratoires et thermiques.

De telles fuites permettent en général d'assurer tout de même une lubrification du système mécanique, mais pendant une durée limitée. En effet, l'huile stockée dans le circuit de lubrification, par exemple dans un réservoir, peut alors être évacuée entièrement à l'extérieur du circuit de lubrification par ces fuites. De telles fuites peuvent éventuellement être détectées par une baisse de la pression de l'huile dans le circuit de lubrification.

Par ailleurs, un circuit de lubrification comporte également un générateur de pression telle une pompe afin d'alimenter en huile le circuit de lubrification et de permettre ainsi sa circulation dans le circuit de lubrification. Lors d'une panne de ce générateur de pression, la circulation de l'huile est interrompue et, par suite, la lubrification du système mécanique est également interrompue immédiatement.

En cas de perte de cette de lubrification, des dégradations peuvent donc apparaitre rapidement sur le fonctionnement du système mécanique. La conséquence de telles dégradations se produisant sur un système mécanique équipant un véhicule automobile par exemple est l'immobilisation du véhicule immédiatement ou bien après l'épuisement de l'huile du circuit de lubrification.

En revanche, si ce système mécanique constitue une boîte de transmission principale de puissance d'un aéronef à voilure tournante, de telles dégradations du circuit de lubrification de la boîte de transmission principale de puissance peuvent alors avoir des conséquences catastrophiques telles qu'un atterrissage d'urgence, voire un crash de l'aéronef.

Afin de pallier ces conséquences, un système mécanique peut comporter un circuit de lubrification de secours. Un tel circuit de lubrification de secours permet d'assurer, lorsque le circuit de lubrification principal est hors service, au moins une lubrification des organes essentiels du système mécanique afin d'assurer le fonctionnement de ce système mécanique. Par sécurité, il est préférable que l'aéronef fonctionne à un niveau de puissance réduit afin de limiter les sollicitations du système mécanique. Ce circuit de lubrification de secours permet alors, lorsque ce système mécanique est par exemple une boîte de transmission principale de puissance d'un aéronef, le fonctionnement du système mécanique et, par suite, celui de l'aéronef, afin d'atteindre un lieu d'atterrissage. Un tel circuit de lubrification de secours améliore ainsi la sécurité de l'aéronef.

Un circuit de lubrification de secours peut être mis en place en parallèle à un circuit de lubrification principal comme décrit dans le document US8230835. Chaque circuit de lubrification comporte sa propre pompe, mais utilise le même réservoir d'huile. Cependant, si ce circuit de secours permet de lubrifier suffisamment un système mécanique en cas de panne du circuit principal, il est dans les faits rarement utilisé. De fait, ce circuit de secours constitue une masse embarquée qui est rarement fonctionnelle.

En outre, les zones d'apparition des fuites du circuit de lubrification principal se situent fréquemment au niveau de l'échangeur thermique et de ses raccordements. De fait, afin d'éviter que de telles fuites apparaissent également sur le circuit de lubrification de secours, le circuit de secours ne comporte pas d'échangeur thermique. De la sorte, l'huile circulant grâce au circuit de secours n'est alors pas refroidie. En conséquence, le circuit de lubrification de secours ne peut être utilisé que pendant une durée limitée afin d'éviter que l'huile atteigne une température trop importante.

Ce circuit de secours est généralement mis en fonctionnement automatiquement suite une perte de pression détectée dans le circuit principal consécutive à une panne de la pompe de ce circuit principal ou bien à une fuite dans ce circuit principal. Ce circuit de lubrification de secours peut également être mis en marche manuellement par un opérateur.

Afin de réduire le risque qu'une défaillance du circuit de lubrification principal provienne du circuit de secours, le circuit de secours est généralement équipé d'un système « by-pass » dont le principe est de fermer la circulation dans les conduites du circuit de secours lorsqu'il y a une pression d'huile suffisante dans le circuit de lubrification principal. Ainsi, en cas de fuite sur le circuit de lubrification de secours, celui-ci n'est plus opérationnel, mais n'entrave pas le fonctionnement du circuit de lubrification principal.

L'inconvénient du système « by-pass » est qu'il laisse la possibilité d'une panne dormante sur le circuit de secours, cette panne n'étant détectée qu'au moment où le circuit de secours est mis en marche. Dans ce cas, il s'agit d'une anomalie majeure pouvant se révéler critique sur un aéronef à voilure tournante.

Pour certaines applications sur des aéronefs à voilure tournante, la boîte de transmission principale de puissance ne comporte pas de circuit de lubrification de secours proprement dit, mais deux circuits de lubrification identiques et indépendants. Chaque circuit de lubrification comporte sa propre pompe et son propre échangeur thermique. Cependant, les deux circuits de lubrification utilisent de façon commune le même réservoir d'huile formé par le fond de la boîte de transmission principale de puissance. De fait, en cas de fuite de l'un des circuits de lubrification, le fond de la boîte transmission principale de puissance va, dans un délai plus ou moins long, se vider et provoquer la défaillance du système de lubrification complet.

Certains systèmes de lubrification comportent un réservoir de secours, parfois directement monté à l'intérieur du système mécanique à lubrifier comme décrit dans les documents EP2505878 et FR2658577. Ce réservoir de secours est positionné au-dessus des organes essentiels à lubrifier et alimenté en permanence par le circuit de lubrification. L'huile s'écoule alors par gravité et en permanence depuis ce réservoir de secours sur ces organes essentiels. De fait, en cas de défaillance du circuit de lubrification, ce réservoir de secours n'est plus alimenté, mais permet d'assurer une lubrification de ces organes essentiels pendant un temps limité correspondant à l'épuisement de l'huile contenue dans ce réservoir de secours.

Par ailleurs, le document US8459413 décrit une architecture différente permettant de limiter les effets d'une fuite présente dans un réservoir d'huile. Cette architecture ne comporte pas de circuit de secours proprement dit, mais une pompe générant une dépression dans le réservoir lorsqu'une fuite est détectée dans ce réservoir. Par suite, cette dépression permet de limiter la quantité d'huile évacuée par cette fuite, augmentant ainsi la durée de fonctionnement du circuit de lubrification malgré la présence de cette fuite. Toutefois, la fuite est toujours présente et la durée de fonctionnement du circuit de lubrification est certes augmentée, mais reste limitée jusqu'à l'épuisement de l'huile.

On connaît également le document US 2013/0306022 décrit un système de lubrification pour moteur comportant deux circuits de lubrification indépendants. Le débit et/ou la pression de ces deux circuits sont différents. Ces deux circuits peuvent lubrifier des composants différents du moteur ou bien les mêmes composants améliorant ainsi l'efficacité de la lubrification.

En outre, l'arrière plan technologique comporte les documents US 4976335 et FR 2826094.

La présente invention a alors pour objet de proposer un procédé et un dispositif de lubrification d'un système mécanique permettant de s'affranchir des limitations mentionnées ci-dessus, permettant la lubrification du système mécanique malgré la présence d'une défaillance sur un circuit de lubrification, notamment sans limitation de la durée de cette lubrification.

Selon l'invention, un procédé de lubrification à double circuit est destiné à la lubrification d'un système mécanique. Ce système mécanique comporte un réservoir dans lequel est situé le liquide de lubrification. Au cours de ce procédé de lubrification à double circuit :
- on lubrifie simultanément le système mécanique par l'intermédiaire d'un premier circuit de lubrification et d'un second circuit de lubrification par le liquide de lubrification,
- on détecte une baisse du niveau du liquide de lubrification dans le réservoir en dessous d'une hauteur limite,
- on arrête la circulation du liquide de lubrification dans le premier circuit de lubrification,
- on mesure la pression du liquide de lubrification dans le second circuit de lubrification,
- on détecte une chute de la pression du liquide de lubrification dans le second circuit de lubrification,
- on rétablit la circulation du liquide de lubrification dans le premier circuit de lubrification, et
- on arrête la circulation du liquide de lubrification dans le second circuit de lubrification.

Ce système mécanique comporte par exemple des éléments tournants et des éléments de transmission de puissance et de réduction ou d'augmentation de vitesse qui nécessitent d'être lubrifiés et refroidis par un liquide de lubrification tel que de l'huile afin que le système mécanique fonctionne efficacement et durablement.

Ce système mécanique est par exemple une boîte de transmission principale de puissance d'un aéronef à voilure tournante. Dans ce cas, le réservoir est généralement constitué par un carter de cette boîte de transmission principale de puissance.

Lorsqu'une fuite apparait sur un des deux circuits de lubrification, une partie du liquide de lubrification est évacuée par cette fuite en dehors du dispositif de lubrification. En conséquence, la hauteur du liquide de lubrification dans le réservoir diminue. Par suite, en détectant que la hauteur du liquide de lubrification dans le réservoir est inférieure à une hauteur limite, on détecte la présence d'une fuite sur au moins un des deux circuits de lubrification.

Selon un premier mode de réalisation du procédé selon l'invention, on détecte la baisse du niveau du liquide de lubrification en dessous de la hauteur limite dans le réservoir en détectant une chute de la pression du liquide de lubrification dans le premier circuit de lubrification par exemple par l'intermédiaire d'un premier capteur de pression que comporte le premier circuit de lubrification. En effet, si un premier point haut d'aspiration du premier circuit de lubrification est situé dans le réservoir au niveau de la hauteur limite, l'aspiration et, par suite, la circulation, du liquide de lubrification dans ce premier circuit de lubrification est impossible dès que la hauteur du liquide de lubrification dans le réservoir est inférieure à la hauteur limite. En conséquence, la pression du liquide de lubrification dans ce premier circuit de lubrification chute.

Selon un second mode de réalisation du procédé selon l'invention, on détecte directement la baisse du niveau du liquide de lubrification en dessous de la hauteur limite dans le réservoir par l'intermédiaire d'un capteur de présence de liquide situé dans le réservoir au niveau de la hauteur limite. En effet, un capteur de présence de liquide positionné dans le réservoir au niveau de la hauteur limite permet de détecter que la hauteur du liquide de lubrification dans le réservoir est soit inférieure à la hauteur limite, soit supérieure ou égale à cette hauteur limite. Dans ce second mode de réalisation, le premier point d'aspiration du premier circuit de lubrification est positionné dans le réservoir en dessous de la hauteur limite. De préférence ce premier point d'aspiration est situé dans le fond du réservoir.

Cette détection de la baisse du niveau du liquide de lubrification en dessous de la hauteur limite permet de déterminer la présence d'une fuite sur un des deux circuits de lubrification sans pour autant déterminer sur quel circuit se situe précisément cette fuite. Dans ce but, le procédé selon l'invention permet ensuite de déterminer le circuit de lubrification défectueux en contrôlant successivement les deux circuits de lubrification.

Suite à cette détection de la baisse du niveau du liquide de lubrification en dessous de la hauteur limite, on arrête tout d'abord la circulation du liquide de lubrification dans le premier circuit de lubrification afin de tester le fonctionnement du second circuit de lubrification.

Concernant le premier mode de réalisation de ce procédé selon l'invention, la baisse du niveau du liquide de lubrification en dessous du premier point haut d'aspiration entraîne normalement le désamorçage d'une première pompe et, par suite, l'arrêt de la circulation du liquide de lubrification dans le premier circuit de lubrification. Cette première pompe a pour fonction de puiser le liquide de lubrification dans le réservoir et d'augmenter sa pression afin que le liquide de lubrification circule dans le premier circuit de lubrification.

Cependant, lorsque le système mécanique équipe un aéronef à voilure tournante, l'assiette de l'aéronef peut varier lors d'un vol et notamment lors de virages. Le premier point haut d'aspiration peut alors se trouver temporairement sous le niveau du liquide de lubrification dans le réservoir malgré la baisse de ce niveau du liquide de lubrification en dessous de la hauteur limite, entraînant le réamorçage de la première pompe et, par suite, de nouveau la circulation du liquide de lubrification dans le premier circuit de lubrification. La première pompe sera une nouvelle fois désamorcée et la circulation du liquide de lubrification arrêtée dans le premier circuit de lubrification dès que l'aéronef aura repris une assiette sensiblement nulle, c'est-à-dire sensiblement horizontale, le premier point haut d'aspiration se trouvant alors de nouveau au dessus du niveau du liquide de lubrification dans le réservoir.

Afin d'éviter ces rétablissements et arrêts intempestifs de la circulation du liquide de lubrification dans le premier circuit de lubrification, il peut donc être utile, voire nécessaire, d'arrêter complètement cette circulation du liquide de lubrification dans le premier circuit de lubrification. En effet, ces rétablissements intempestifs de la circulation du liquide de lubrification dans le premier circuit de lubrification sont à éviter car ils peuvent, si la fuite détectée se trouve sur ce premier circuit de lubrification, contribuer à vider une partie du liquide de lubrification se trouvant dans le réservoir.

Par contre, pour le second mode de réalisation de ce procédé selon l'invention, le premier point d'aspiration du premier circuit de lubrification étant positionné en dessous de la hauteur limite, il n'y a pas de rupture de l'alimentation de la première pompe par le liquide de lubrification et la circulation du liquide de lubrification dans le premier circuit de lubrification n'est pas arrêtée par la baisse du niveau du liquide de lubrification en dessous de la hauteur limite.

Il est donc nécessaire d'arrêter la circulation du liquide de lubrification dans le premier circuit de lubrification afin d'éviter de vider le liquide de lubrification se trouvant dans le réservoir.

On peut arrêter la circulation du liquide de lubrification dans le premier circuit de lubrification en arrêtant la première pompe que comporte le premier circuit de lubrification. Par exemple, la première pompe est une pompe électrique et on coupe l'alimentation électrique de cette première pompe. La première pompe peut également être une pompe mécanique entrainée par une boîte de transmission et on peut alors désolidariser la première pompe de cette boîte de transmission par exemple par l'intermédiaire d'un moyen d'embrayage.

On peut également arrêter la lubrification du système mécanique par le premier circuit de lubrification sans agir sur cette première pompe mais par l'intermédiaire d'une première vanne que comporte le premier circuit de lubrification. Ainsi, cette première vanne est mise dans une position fermée coupant toute circulation du liquide de lubrification dans le premier circuit de lubrification. Cette première vanne en position fermée permet par exemple la circulation du liquide de lubrification entre le réservoir et la première pompe, mais le liquide de lubrification est ensuite renvoyé vers le réservoir et ne peut alors pas atteindre le premier circuit de lubrification.

Cette position fermée de la première vanne permet avantageusement de ne pas arrêter la première pompe tant que l'on n'est pas certain que la défaillance provient bien du premier circuit de lubrification.

Le pilotage de cette première vanne en position fermée peut être effectué automatiquement suite à la détection de la baisse du niveau du liquide de lubrification en dessous de la hauteur limite.

Le pilotage de cette première vanne en position fermée peut également être effectué manuellement par un opérateur suite à l'émission d'une alarme visuelle et/ou sonore consécutive à la détection de la baisse du niveau du liquide de lubrification en dessous de la hauteur limite.

Ensuite, on peut tester la pression du liquide de lubrification dans le second circuit de lubrification par exemple par l'intermédiaire d'un second capteur de pression que comporte le second circuit de lubrification. Ce second capteur de pression mesure la pression du liquide de lubrification dans le second circuit de lubrification.

Cependant, un capteur de pression ne détecte pas forcément une chute de pression consécutive à une fuite présente sur un circuit de lubrification tant que le liquide de lubrification circule sous pression dans ce circuit de lubrification. En effet, s'il s'agit d'une fuite lente, la dépression du liquide de lubrification générée par cette fuite lente n'est pas détectée par les capteurs de pression généralement utilisés dans un circuit de lubrification.

En revanche, si la fuite se trouve sur ce second circuit de lubrification, le liquide de lubrification circulant sous pression dans ce second circuit de lubrification, une partie du liquide de lubrification continue de s'évacuer par cette fuite. De fait, le niveau du liquide de lubrification dans le réservoir baisse également.

En conséquence, lorsque le niveau du liquide de lubrification dans le réservoir se trouve en dessous d'un second point d'aspiration de ce second circuit de lubrification, le liquide de lubrification ne peut plus circuler dans le second circuit de lubrification. De fait, la pression du liquide de lubrification dans ce second circuit de lubrification chute dès que le niveau du liquide de lubrification dans le réservoir est en dessous du second point d'aspiration de ce second circuit de lubrification.

Ce second point d'aspiration doit se trouver dans le réservoir à une position inférieure à la hauteur limite afin de permettre d'alimenter en liquide de lubrification le second circuit de lubrification après détection que la hauteur du liquide de lubrification dans le réservoir est inférieure à la hauteur limite. Par contre, le second point d'aspiration ne doit pas se trouver dans le fond du réservoir afin d'éviter de vider totalement le réservoir avant de détecter que la fuite se trouve sur le second circuit de lubrification.

Par contre, si aucune fuite n'est présente dans le second circuit de lubrification, le niveau du liquide de lubrification dans le réservoir ne change pas et la pression du liquide de lubrification dans ce second circuit de lubrification ne change pas non plus. On peut alors en déduire que la fuite est présente dans le premier circuit de lubrification. Il convient donc de maintenir active la circulation du liquide de lubrification uniquement dans ce second circuit de lubrification, la circulation du liquide de lubrification dans le premier circuit de lubrification étant arrêtée. Il est alors possible, si cela n'avait pas été fait préalablement, notamment lors de l'utilisation d'une première vanne, d'arrêter la première pompe.

Suite à la détection d'une chute de la pression du liquide de lubrification dans le second circuit de lubrification, on rétablit la circulation du liquide de lubrification dans le premier circuit de lubrification et on arrête la circulation du liquide de lubrification dans le second circuit de lubrification.

Comme pour le premier circuit de lubrification, la baisse du niveau du liquide de lubrification en dessous du second point d'aspiration entraîne normalement l'arrêt de la circulation du liquide de lubrification dans le second circuit de lubrification, une seconde pompe présente sur le second circuit de lubrification étant désamorcée. Cette seconde pompe a pour fonction de puiser le liquide de lubrification dans le réservoir et d'augmenter sa pression afin que le liquide de lubrification circule dans le second circuit de lubrification.

Cependant, afin d'éviter des rétablissements et arrêts intempestifs de la circulation du liquide de lubrification dans le second circuit de lubrification dans le cas où le système mécanique équipe un aéronef à voilure tournante, il peut être utile, voire nécessaire, d'arrêter complètement cette circulation du liquide de lubrification dans le second circuit de lubrification.

On peut alors arrêter la circulation du liquide de lubrification dans le second circuit de lubrification en arrêtant la seconde pompe du second circuit de lubrification. Comme pour la première pompe, la seconde pompe peut être une pompe électrique ou bien une pompe mécanique entrainée par une boîte de transmission. On peut alors selon le cas couper l'alimentation électrique de la seconde pompe ou bien désolidariser la seconde pompe de la boîte de transmission par l'intermédiaire d'un moyen d'embrayage.

On peut également arrêter la circulation du liquide de lubrification dans le second circuit de lubrification sans agir sur cette seconde pompe, mais par l'intermédiaire d'une seconde vanne que comporte le second circuit de lubrification. Ainsi, cette seconde vanne est mise dans une position fermée coupant toute circulation du liquide de lubrification dans le second circuit de lubrification. Cette seconde vanne en position fermée permet par exemple la circulation du liquide de lubrification entre le réservoir et la seconde pompe, mais le liquide de lubrification est ensuite renvoyé vers le réservoir et ne peut alors pas atteindre le second circuit de lubrification.

Le pilotage de cette seconde vanne en position fermée peut être effectué automatiquement suite à la détection d'une chute de la pression du liquide de lubrification dans le second circuit de lubrification.

Le pilotage de cette seconde vanne en position fermée peut également être effectué manuellement par un opérateur suite à l'émission d'une alarme visuelle et/ou sonore consécutive à la détection de la chute de la pression du liquide de lubrification dans le second circuit de lubrification.

Parallèlement à l'arrêt de la circulation du liquide de lubrification dans le second circuit de lubrification, on rétablit la circulation du liquide de lubrification dans le premier circuit de lubrification afin d'assurer la lubrification du système mécanique par le premier circuit de lubrification.

Si la première pompe du premier circuit de lubrification a été arrêtée préalablement, on remet alors en marche cette première pompe.

Selon le second mode de réalisation du procédé selon l'invention, cette remise en marche de la première pompe est suffisante, le premier point d'aspiration du premier circuit de lubrification étant positionné dans le réservoir en dessous de la hauteur limite. Cependant, ce premier point d'aspiration doit également être situé en dessous du second point d'aspiration afin de permettre d'alimenter en liquide de lubrification le premier circuit de lubrification.

Par contre, selon le premier mode de réalisation du procédé selon l'invention, cette remise en marche de la première pompe n'est pas suffisante. En effet, selon ce premier mode de réalisation, un premier point haut d'aspiration du premier circuit de lubrification est situé dans le réservoir au niveau de la hauteur limite. De fait, le premier circuit de lubrification doit également comporter un premier point bas d'aspiration situé dans le réservoir en dessous du second point d'aspiration et de préférence dans le fond du réservoir.

Le premier circuit de lubrification peut comporter deux premiers points d'aspiration et une première vanne afin de basculer la première pompe sur le premier point haut d'aspiration ou bien sur le premier point bas d'aspiration.

Cette première vanne permet par défaut que la première pompe soit en liaison avec le premier point haut d'aspiration. Le pilotage de cette première vanne afin que la première pompe soit en liaison avec le premier point bas d'aspiration peut être effectué automatiquement suite à par la détection d'une chute de la pression du liquide de lubrification dans le second circuit de lubrification.

Le pilotage de cette première vanne peut également être effectué manuellement par un opérateur suite à l'émission d'une alarme visuelle et/ou sonore consécutive à la détection de la chute de la pression du liquide de lubrification dans le second circuit de lubrification.

Par ailleurs, cette première vanne peut également comporter une position fermée comme évoqué précédemment, cette position fermée coupant toute circulation du liquide de lubrification dans le premier circuit de lubrification.

En outre, selon le premier mode de réalisation de l'invention, le premier circuit de lubrification peut comporter un seul premier point d'aspiration qui est alors mobile. Ce premier point d'aspiration peut se déplacer verticalement dans le réservoir d'une position haute située au niveau de la hauteur limite à une position basse située par exemple au fond du réservoir. Par défaut, ce premier point d'aspiration mobile est en position haute, constituant ainsi le premier point haut d'aspiration. Ensuite, pour rétablir la circulation du liquide de lubrification dans le premier circuit de lubrification, on déplace ce premier point d'aspiration mobile en position basse constituant ainsi le premier point bas d'aspiration.

Le déplacement du premier point d'aspiration de la position haute à la position basse peut être commandé automatiquement suite à la détection de la chute de la pression du liquide de lubrification dans le second circuit de lubrification. Ce déplacement peut également être commandé manuellement par un operateur suite à l'émission d'une alarme visuelle et/ou sonore consécutive à la détection de la chute de la pression du liquide de lubrification dans le second circuit de lubrification.

L'arrêt de la circulation du liquide de lubrification dans le second circuit de lubrification et le rétablissement de la circulation du liquide de lubrification dans le premier circuit de lubrification peuvent être réalisés de façon simultanée ou bien séquentielle, l'arrêt du second circuit de lubrification pouvant être réalisé avant ou bien après le rétablissement du premier circuit de lubrification.

Cependant, le rétablissement du premier circuit de lubrification est réalisé de préférence avant l'arrêt du second circuit de lubrification afin de limiter au minimum la durée pendant laquelle aucune lubrification du système mécanique n'est assurée.

De plus, après avoir rétabli la circulation du liquide de lubrification dans le premier circuit de lubrification, on mesure la pression du liquide de lubrification dans le premier circuit de lubrification. Si cette pression du liquide de lubrification dans le premier circuit de lubrification chute de nouveau, cela signifie qu'une fuite est également présente sur le premier circuit de lubrification ou bien que la fuite se trouve en fait directement sur le réservoir. La pression du liquide de lubrification dans ce premier circuit de lubrification chute notamment dès que le niveau du liquide de lubrification dans le réservoir est en dessous du premier point bas d'aspiration de ce premier circuit de lubrification. Dans ce cas, aucune lubrification du système mécanique n'est assurée par l'un ou l'autre des circuits de lubrification.

Par ailleurs, après avoir détecté la baisse du niveau du liquide de lubrification en dessous de la hauteur limite dans le réservoir, la lubrification du système mécanique est assurée uniquement par un seul circuit de lubrification. De fait, la lubrification du système mécanique est réduite. Il convient alors de réduire la sollicitation du système mécanique afin de ne pas dégrader ce système mécanique, son niveau de fonctionnement devant être en accord avec cette lubrification réduite. Dans ce but, une alarme, qui peut par exemple être visuelle et/ou sonore, est envoyée à un opérateur dès la détection de la baisse du niveau du liquide de lubrification dans le réservoir en dessous de la hauteur limite.

Ainsi, lorsque le système mécanique est une boîte de transmission principale de puissance d'un aéronef à voilure tournante, la sollicitation de cette boîte de transmission principale de puissance doit être réduite dès que l'on détecte la baisse du niveau du liquide de lubrification en dessous de la hauteur limite dans le réservoir. Par exemple, on réduit la vitesse d'avancement de l'aéronef.

La présente invention a aussi pour objet un dispositif de lubrification à double circuit d'un système mécanique. Ce dispositif de lubrification est muni d'un réservoir et de deux circuits de lubrification indépendants. Le réservoir contient un liquide de lubrification tel que de l'huile et est utilisé conjointement par les deux circuits de lubrification afin de lubrifier le système mécanique.

Un premier circuit de lubrification comporte une première pompe, des premières conduites, un premier capteur de pression, un premier filtre, un premier échangeur thermique, des premiers gicleurs et au moins un premier point d'aspiration du liquide de lubrification, chaque premier point d'aspiration étant situé dans le réservoir. La première pompe distribue par l'intermédiaire d'un premier point d'aspiration le liquide de lubrification présent dans le réservoir dans les premières conduites et jusqu'aux premiers gicleurs afin de lubrifier le système mécanique.

Un second circuit de lubrification comporte une seconde pompe, des secondes conduites, un second capteur de pression, un second filtre, un second échangeur thermique, des seconds gicleurs et un second point d'aspiration du liquide de lubrification, ce second point d'aspiration étant situé dans le réservoir. La seconde pompe distribue par l'intermédiaire du second point d'aspiration le liquide de lubrification présent dans le réservoir dans les secondes conduites et jusqu'aux seconds gicleurs afin de lubrifier le système mécanique.

Ainsi, les deux circuits de lubrification permettent de lubrifier simultanément le système mécanique.

En outre, les premiers et seconds gicleurs peuvent être constitués par une même série de gicleurs communs aux deux circuits de lubrification. Chaque circuit de lubrification comporte alors un ou plusieurs moyens anti-retours, tels que des clapets anti-retour, évitant ainsi une communication directe entre les deux circuits de lubrification.

Ce dispositif de lubrification à double circuit est remarquable en ce qu'il comporte un moyen de détection de passage en dessous de la hauteur limite du niveau liquide de lubrification dans le réservoir. De plus, le second point d'aspiration est situé en dessous de cette hauteur limite. Le dispositif de lubrification à double circuit peut alors mettre en oeuvre le procédé de lubrification précédemment décrit.

Selon un premier mode de réalisation du dispositif de lubrification à double circuit selon l'invention, le moyen de détection est formé par un premier point haut d'aspiration et le premier capteur de pression, ce premier point haut d'aspiration étant situé au niveau de la hauteur limite.

Ce premier mode de réalisation de ce dispositif de lubrification à double circuit peut se décliner selon plusieurs variantes.

Selon une première variante du premier mode de réalisation, le premier circuit de lubrification comporte deux premiers points d'aspiration et une première vanne à deux positions reliant la première pompe avec l'un ou l'autre de ces deux premiers points d'aspiration. Le premier point haut d'aspiration est situé au niveau de la hauteur limite et un premier point bas d'aspiration est situé à une position basse, en dessous de la hauteur limite et également en dessous du second point d'aspiration. De préférence, ce premier point bas d'aspiration est situé dans le fond du réservoir.

Cette première vanne permet une circulation du liquide de lubrification soit, dans une première position, entre la première pompe et le premier point haut d'aspiration, soit, dans une seconde position, entre la première pompe et le premier point bas d'aspiration. Par défaut, cette première vanne est à la première position. Le pilotage de cette première vanne vers la seconde position est effectué suite à une chute de la pression du liquide de lubrification dans le second circuit de lubrification, cette chute de la pression étant détectée par le second capteur de pression.

Selon une seconde variante du premier mode de réalisation, le premier circuit de lubrification comporte deux premiers points d'aspiration et une première vanne à trois positions mettant en liaison la première pompe avec l'un ou l'autre des premiers points d'aspiration afin que le liquide de lubrification circule dans le premier circuit de lubrification ou bien coupant cette circulation du liquide de lubrification dans le premier circuit de lubrification. Comme pour la première variante, le premier point haut d'aspiration est situé au niveau de la hauteur limite et un premier point bas d'aspiration est situé à une position basse, en dessous de la hauteur limite et également en dessous du second point d'aspiration.

Cette première vanne permet soit, dans une première position, une circulation du liquide de lubrification entre la première pompe et le premier point haut d'aspiration puis dans le premier circuit de lubrification, soit, dans une seconde position fermée, aucune circulation du liquide de lubrification dans le premier circuit de lubrification, soit, dans une troisième position, une circulation du liquide de lubrification entre la première pompe et le premier point bas d'aspiration puis dans le premier circuit de lubrification. Par défaut, cette première vanne est à la première position. Le pilotage de cette première vanne vers la seconde position fermée est effectué suite à une baisse du niveau du liquide de lubrification dans le réservoir en dessous de la hauteur limite détectée par le moyen de détection. Le pilotage de cette première vanne vers la troisième position est effectué suite à une chute de la pression du liquide de lubrification détectée par le second capteur de pression dans le second circuit de lubrification.

Par ailleurs, la baisse du niveau du liquide de lubrification dans le réservoir en dessous de la hauteur limite est détectée par l'intermédiaire du premier capteur de pression que comporte le moyen de détection. Par suite, le pilotage de cette première vanne vers la seconde position fermée est effectué par ce premier capteur de pression. De fait, cette seconde variante du dispositif de lubrification à double circuit selon l'invention permet avantageusement d'arrêter la circulation du liquide de lubrification dans le premier circuit de lubrification dès qu'une chute de la pression du liquide de lubrification dans le premier circuit de lubrification est détectée par le premier capteur de pression.

Cette chute de la pression du liquide de lubrification dans le premier circuit de lubrification peut être consécutive comme évoqué précédemment à une baisse du niveau du liquide de lubrification dans le réservoir en dessous de la hauteur limite.

Cette chute de la pression du liquide de lubrification dans le premier circuit de lubrification peut également être engendrée par une fuite importante sur le premier circuit de lubrification, consécutivement par exemple à une rupture franche sur une première conduite ou bien au niveau du premier échangeur thermique. Avantageusement, cette seconde variante permet ainsi d'arrêter la circulation du liquide de lubrification dans le premier circuit de lubrification sans attendre que le niveau du liquide de lubrification dans le réservoir baisse en dessous de la hauteur limite, permettant ainsi de conserver une quantité de liquide de lubrification plus importante dans ce réservoir.

Selon une troisième variante du premier mode de réalisation de l'invention, le premier circuit de lubrification comporte un seul premier point d'aspiration qui est mobile verticalement dans le réservoir. Ce premier point d'aspiration est mobile dans le réservoir entre la hauteur limite et une position basse située au fond du réservoir, c'est-à-dire en dessous de la hauteur limite.

Ce premier point d'aspiration est positionné par défaut au niveau de la hauteur limite afin de permettre de détecter la baisse du niveau du liquide de lubrification dans le réservoir en dessous de la hauteur limite. Ensuite, s'il est avéré que la fuite détectée par le moyen de détection se trouve sur le second circuit de lubrification, le premier point d'aspiration se déplace dans le réservoir vers une position basse afin de permettre d'alimenter le premier circuit de lubrification en liquide de lubrification. Cette position basse est située en dessous du second point d'aspiration, et de préférence dans le fond du réservoir.

Cette troisième variante permet avantageusement de n'utiliser qu'un seul premier point d'aspiration et de se passer d'une première vanne. De plus, la position du premier point d'aspiration étant mobile, la hauteur limite peut être adaptée en fonction de la quantité de liquide de lubrification réellement présente dans le réservoir.

Selon un second mode de réalisation du dispositif de lubrification à double circuit selon l'invention, le moyen de détection est formé par un capteur de présence de liquide positionné dans le réservoir au niveau de la hauteur limite. Le premier circuit de lubrification comporte alors un seul premier point d'aspiration situé à une position basse, en dessous de la hauteur limite et également en dessous du second point d'aspiration. De préférence, ce premier point d'aspiration est situé dans le fond du réservoir.

Selon ce second mode de réalisation, le premier circuit de lubrification peut comporter une première vanne à deux positions permettant la circulation du liquide de lubrification dans le premier circuit de lubrification ou bien coupant cette circulation. De fait, cette première vanne permet soit dans une première position, une circulation du liquide de lubrification entre la première pompe et le premier point d'aspiration puis dans le premier circuit de lubrification, soit dans une seconde position fermée, aucune circulation du liquide de lubrification dans le premier circuit de lubrification. Par défaut, cette première vanne est à la première position. Le pilotage de cette première vanne vers la seconde position fermée est effectué suite à la détection de la baisse du niveau du liquide de lubrification dans le réservoir en dessous de la hauteur limite.

Par ailleurs, une quatrième variante est applicable aux deux modes de réalisation du dispositif de lubrification à double circuit selon l'invention. Selon cette quatrième variante, le second circuit de lubrification comporte une seconde vanne à deux positions permettant une circulation du liquide de lubrification entre la seconde pompe et le second point d'aspiration puis dans le second circuit de lubrification ou bien coupant cette circulation du liquide de lubrification dans le second circuit de lubrification.

Cette seconde vanne permet ainsi dans une position ouverte d'alimenter le second circuit de lubrification avec le liquide de lubrification et dans une position fermée d'arrêter la circulation du liquide de lubrification dans le second circuit de lubrification. Par défaut, cette seconde vanne est à la position ouverte. Le pilotage de cette seconde vanne vers la position fermée est effectué suite à une chute de la pression du liquide de lubrification dans le second circuit de lubrification, cette chute de la pression étant détectée par le second capteur de pression.

Par ailleurs, cette chute de la pression du liquide de lubrification dans le second circuit de lubrification peut être consécutive à une baisse du niveau du liquide de lubrification dans le réservoir en dessous de la position du second point d'aspiration. Cette chute de la pression du liquide de lubrification dans le second circuit de lubrification peut également être engendrée par une fuite importante sur le second circuit de lubrification, consécutivement par exemple à une rupture franche sur une seconde conduite ou bien au niveau du second échangeur thermique.

Avantageusement, cette quatrième variante permet ainsi de couper l'alimentation du second circuit de lubrification sans attendre que le niveau du liquide de lubrification dans le réservoir baisse en dessous de la position du second point d'aspiration, permettant ainsi de conserver une quantité de liquide de lubrification plus importante dans ce réservoir.

Ce dispositif de lubrification à double circuit permet ainsi de proposer un système global de lubrification d'un système mécanique à fiabilité augmentée, ce dispositif de lubrification étant composé exclusivement de deux sous-systèmes de lubrification complets et indépendants, à l'exception d'un réservoir de liquide de lubrification commun.

De plus, ce dispositif de lubrification évite la défaillance complète de la lubrification du système mécanique suite à l'épuisement du liquide de lubrification du réservoir en cas de fuite lente par exemple sur un circuit de lubrification, une telle fuite lente n'étant pas détectable par des capteurs de pression.

Il n'y a ainsi pas de limitation de la durée de lubrification suite à la détection d'une fuite sur un circuit de lubrification tout en assurant un refroidissement par au moins un circuit de lubrification du liquide de lubrification.

En outre, les première et seconde pompes ainsi que les première et seconde vannes peuvent être situées à l'intérieur du système mécanique, par exemple au dessus du réservoir. Avantageusement, suite à une fuite au niveau d'une pompe ou bien d'une vanne, le liquide de lubrification se déverse dans le réservoir, évitant ainsi de vider en partie le liquide de lubrification du réservoir.

La présente invention a aussi pour objet une boîte de transmission principale de puissance destinée à un aéronef à voilure tournante. Cette boîte de transmission principale de puissance est munie d'un dispositif de lubrification à double circuit comme précédemment décrit. Le réservoir du dispositif de lubrification à double circuit est constitué par un carter de la boîte de transmission principale de puissance.

Avantageusement, aucun système de lubrification de secours, dont l'utilisation est très occasionnelle et uniquement en cas de défaillance d'un système de lubrification principal et dont la masse peut alors être pénalisante, n'est installé sur la boîte de transmission principale de puissance.

L'invention et ses avantages apparaîtront avec plus de détails dans le cadre de la description qui suit avec des exemples donnés à titre illustratif en référence aux figures annexées qui représentent :
- les figures 1 à 3, des variantes d'un premier mode de réalisation du dispositif de lubrification à double circuit,
- la figure 4, un second mode de réalisation du dispositif de lubrification à double circuit, et
- la figure 5, un schéma synoptique d'un procédé de lubrification à double circuit.

Les éléments présents dans plusieurs figures distinctes sont affectés d'une seule et même référence.

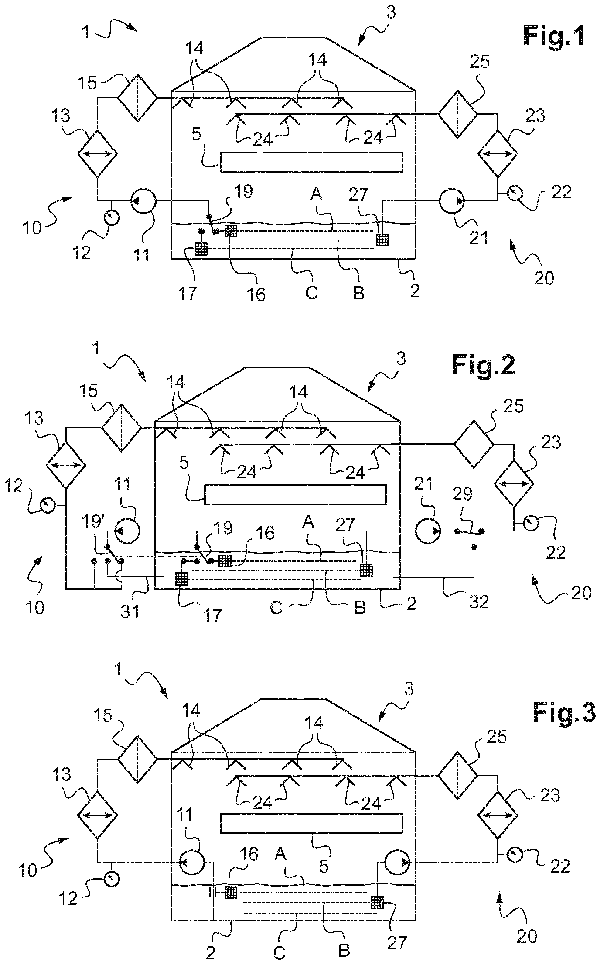

Des dispositifs de lubrification 1 à double circuit, représentés sur les figures 1 à 4, ont pour fonction de lubrifier un système mécanique 3 comportant notamment des éléments tournants 5, tels que des arbres et des roulements, ainsi que des éléments de transmission de puissance et de réduction ou d'augmentation de vitesse 5, tels que des pignons et/ou des engrenages. Ce système mécanique 3 est par exemple une boîte de transmission principale de puissance équipant un aéronef à voilure tournante.

Chaque dispositif de lubrification 1 à double circuit comporte un réservoir 2 et deux circuits de lubrification 10,20 permettant de lubrifier simultanément le système mécanique 3. Le réservoir 2 est formé par un carter du système mécanique 3 et contient un liquide de lubrification tel que de l'huile. Chaque circuit de lubrification 10,20 comporte une pompe 11,21, un capteur de pression 12,22, un échangeur thermique 13,23, un filtre 15,25, des gicleurs 14,24, au moins un point d'aspiration 16,17,27 et des conduites reliant respectivement les composants de chaque circuit de lubrification 10,20. Le second circuit de lubrification 20 comporte un seul second point d'aspiration 27 alors que le premier circuit de lubrification 10 peut comporter un ou bien deux premiers points d'aspiration 16,17. Les points d'aspiration 16,17,27 sont situés dans le réservoir 2, le second point d'aspiration 27 étant positionné à une position intermédiaire B dans ce réservoir 2.

Chaque pompe 11,21 permet de puiser le liquide de lubrification dans le réservoir 2 par l'intermédiaire d'un point d'aspiration 16,17,27 et de distribuer le liquide de lubrification dans chaque circuit de lubrification 10,20. Chaque échangeur thermique 13,23 permet de refroidir le liquide de lubrification avant qu'il atteigne les gicleurs 14,24 en passant à travers les filtres 15,25. Les gicleurs 14,24 sont spécifiques et distincts pour chaque circuit de lubrification 10,20, mais peuvent cependant être confondus et communs aux deux circuits de lubrification 10,20.

Selon une première variante d'un premier mode de réalisation du dispositif de lubrification 1 à double circuit représentée sur la figure 1, le premier circuit de lubrification 10 comporte deux premiers points d'aspiration 16,17 et une première vanne 19 à deux positions. Cette première vanne 19 permet de relier la première pompe 11 avec l'un ou l'autre de ces deux premiers points d'aspiration 16,17 afin de distribuer le liquide de lubrification dans le premier circuit de lubrification 10. Un premier point haut d'aspiration 16 et un premier point bas d'aspiration 17 sont respectivement situés à une position haute A et à une position basse C dans ce réservoir 2. La position basse C se situe au fond du réservoir 2 et la position intermédiaire B est située entre la position haute A et la position basse C.

Une seconde variante du premier mode de réalisation du dispositif de lubrification 1 à double circuit représentée sur la figure 2 diffère de la première variante en deux points. La première vanne 19 à deux positions est remplacée par une première vanne 19 à trois positions mettant en liaison la première pompe 11 avec l'un ou l'autre des premiers points d'aspiration 16,17 afin que le liquide de lubrification circule dans le premier circuit de lubrification 10 ou bien coupant cette circulation du liquide de lubrification dans le premier circuit de lubrification 10. Cette première vanne 19 pilote à la fois l'aspiration et le refoulement de la première pompe 11, une première vanne secondaire 19' liée à la première vanne 19 se trouvant au refoulement de la première pompe 11. Cette première vanne 19 permet ainsi soit dans une première position, de distribuer le liquide de lubrification dans le premier circuit de lubrification 10 par l'intermédiaire du premier point haut d'aspiration 16, soit dans une seconde position fermée, aucune circulation du liquide de lubrification dans le premier circuit de lubrification 10, soit dans une troisième position, de distribuer le liquide de lubrification dans le premier circuit de lubrification 10 par l'intermédiaire du premier point bas d'aspiration 17.

Au niveau de la première vanne secondaire 19', les première et troisième positions mettent en communication le refoulement de la première pompe 11 avec le premier circuit de lubrification 10 permettant ainsi au liquide de lubrification sortant de la première pompe 11 d'atteindre les premiers gicleurs 14. Par contre, la seconde position de cette première vanne secondaire 19' met en communication le refoulement de la première pompe 11 avec une première conduite de retour 31 permettant au liquide de lubrification sortant de la première pompe 11 de retourner dans le réservoir 2. De plus, les seconde et troisième positions de la première vanne 19 proprement dite sont reliées au premier point bas d'aspiration 17 alors que la première position est reliée au premier point haut d'aspiration 16.

Ces première et troisième positions de la première vanne 19 de cette seconde variante correspondent également aux deux positions de la première vanne 19 de la première variante. Par défaut, cette première vanne 19 est à la première position pour la première et la seconde variantes.

De plus, le second circuit de lubrification 20 comporte une seconde vanne 29 à deux positions permettant de relier la seconde pompe 21 au second point d'aspiration 27 afin que le liquide de lubrification circule dans le second circuit de lubrification 20 ou bien de couper cette circulation du liquide de lubrification dans le second circuit de lubrification 20. Par défaut, cette seconde vanne 29 est à une position ouverte reliant le refoulement de la seconde pompe 21 au second circuit de lubrification 20 permettant ainsi au liquide de lubrification sortant de la seconde pompe 21 d'atteindre les seconds gicleurs 24. Une position fermée de cette seconde vanne 29 relie le refoulement de la seconde pompe 21 à une seconde conduite de retour 32 permettant au liquide de lubrification sortant de la seconde pompe 21 de retourner dans le réservoir 2.

Une troisième variante du premier mode de réalisation du dispositif de lubrification 1 à double circuit est représentée sur la figure 3. Cette troisième variante diffère de la première variante par la présence d'un seul premier point d'aspiration 16 et l'absence d'une première vanne 19. Ce premier point d'aspiration 16 est mobile dans le réservoir 2 entre la position haute A et la position basse C.

De plus, les première et seconde pompes 11, 21 sont situées à l'intérieur du système mécanique 3 et au dessus du réservoir 2. De fait, suite à une fuite au niveau d'une pompe 11,21, le liquide de lubrification se déverse dans le réservoir 2, évitant ainsi de vider en partie le liquide de lubrification du réservoir 2.

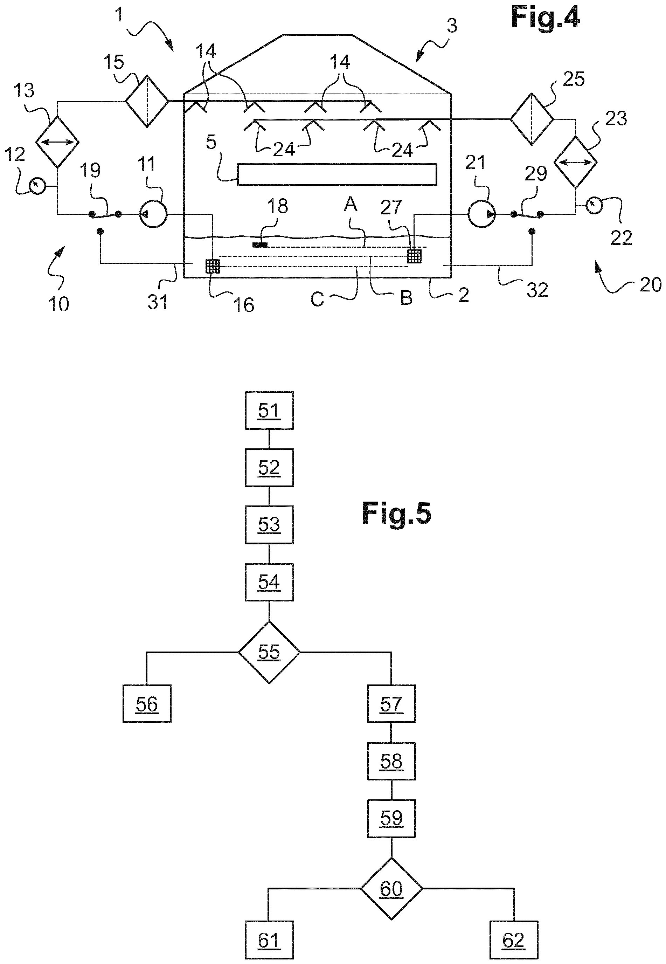

Selon un second mode de réalisation du dispositif de lubrification à double circuit représenté sur la figure 4, le premier circuit de lubrification 10 comporte un seul premier point d'aspiration 16, un capteur de présence de liquide 18 et une première vanne 19 à deux positions. Cette première vanne 19 permet de relier la première pompe 11 au premier point d'aspiration 16 afin que le liquide de lubrification circule dans le premier circuit de lubrification 10 ou bien de couper cette circulation du liquide de lubrification dans le premier circuit de lubrification 10. La position ouverte de cette première vanne 19 met en communication le refoulement de la première pompe 11 avec le premier circuit de lubrification 10 permettant ainsi au liquide de lubrification sortant de la première pompe 11 d'atteindre les premiers gicleurs 14. La position fermée de cette première vanne 19 met en communication le refoulement de la première pompe 11 avec une première conduite de retour 31 permettant au liquide de lubrification sortant de la première pompe 11 de retourner dans le réservoir 2. Le premier point d'aspiration 16 est positionné dans le réservoir 2 à la position basse C. Le capteur de présence de liquide 18 est situé dans le réservoir 2 à la position haute A.

De plus, le second circuit de lubrification 20 comporte une seconde vanne 29 à deux positions, cette seconde vanne 29 étant identique à celle de la seconde variante du premier mode de réalisation du dispositif de lubrification 1 à double circuit.

Les dispositifs de lubrification 1 à double circuit représentés sur les figures 1 à 4 sont capables de mettre en oeuvre le procédé de lubrification selon l'invention dont un schéma synoptique est représenté sur la figure 5. Ce procédé de lubrification comporte plusieurs étapes.

Au cours d'une première étape 51, on lubrifie simultanément le système mécanique 3 par l'intermédiaire du premier circuit de lubrification 10 et du second circuit de lubrification 20 grâce au liquide de lubrification. Le liquide de lubrification est puisé par les première et seconde pompes 11,21 dans le réservoir 2 et distribué respectivement dans les premier et second circuits de lubrification 10,20. Les gicleurs 14,24 peuvent alors diffuser ce liquide de lubrification sur le système mécanique 3.

Au cours d'une seconde étape 52, on détecte une baisse du niveau du liquide de lubrification dans le réservoir 2 en dessous d'une hauteur limite par l'intermédiaire d'un moyen de détection de passage en dessous de cette hauteur limite du niveau du liquide de lubrification dans le réservoir 2.

Pour le premier mode de réalisation du dispositif de lubrification 1 à double circuit, le moyen de détection est formé par le premier point haut d'aspiration 16 et le premier capteur de pression 12. Pour la troisième variante, le premier point d'aspiration 16 mobile doit alors se trouver à la position haute A.

Pour le second mode de réalisation du dispositif de lubrification 1 à double circuit, le moyen de détection est formé par le capteur de présence de liquide 18.

La position haute A correspond à la hauteur limite dans le réservoir 2 et le moyen de détection permet de déterminer la baisse du niveau du liquide de lubrification en dessous de cette hauteur limite. Cette baisse du niveau du liquide de lubrification dans le réservoir 2 en dessous d'une hauteur limite signifie que le réservoir 2 se vide progressivement du liquide de lubrification et, par suite, qu'une fuite s'est produite sur un des circuits de lubrification 10,20.

Pour le premier mode de réalisation du dispositif de lubrification 1 à double circuit, suite à cette baisse du niveau du liquide de lubrification dans le réservoir 2 en dessous de la hauteur limite, le premier point haut d'aspiration 16, situé à la position haute A, se trouve au dessus du niveau du liquide de lubrification. De fait, la première pompe 11 ne peut plus distribuer le liquide de lubrification dans le premier circuit de lubrification 10. La pression du liquide de lubrification chute donc dans ce premier circuit de lubrification 10, cette chute de pression étant détectée par le premier capteur de pression 12.

Pour le second mode de réalisation du dispositif de lubrification 1 à double circuit, cette baisse du niveau du liquide de lubrification dans le réservoir 2 en dessous de la hauteur limite est détectée directement par le capteur de présence de liquide 18.

Au cours d'une troisième étape 53, on arrête la circulation du liquide de lubrification dans le premier circuit de lubrification 10 afin de tester le fonctionnement du second circuit de lubrification 20. En effet, le moyen de détection permet de déterminer la présence d'une fuite sur un circuit de lubrification 10,20, sans identifier sur quel circuit de lubrification 10,20 se trouve réellement cette fuite. Par suite, en arrêtant la circulation du liquide de lubrification dans le premier circuit de lubrification 10, le liquide de lubrification circule uniquement dans le second circuit de lubrification 20.

Le liquide de lubrification se trouvant en dessous de la hauteur limite dans le réservoir 2, la première pompe 11 ne permet plus d'alimenter le premier circuit de lubrification 10 pour le premier mode de réalisation du dispositif de lubrification 1 à double circuit. En conséquence, la circulation du liquide de lubrification est donc arrêtée dans ce premier circuit de lubrification 10.

Par contre, pour le second mode de réalisation du dispositif de lubrification 1 à double circuit, le seul premier point d'aspiration 16 se trouve à la position basse C, donc en dessous de la hauteur limite. Il convient donc d'arrêter la circulation du liquide de lubrification dans le premier circuit de lubrification 10 soit en arrêtant directement la première pompe 11, soit par l'intermédiaire de la première vanne 19. Cette première vanne 19 doit alors être mise à la position fermée afin de couper la circulation du liquide de lubrification dans le premier circuit de lubrification 10. Cette mise en position fermée de la première vanne 19 est pilotée par la détection de la baisse du niveau du liquide de lubrification dans le réservoir 2 en dessous de la hauteur limite et effectuée de façon automatique. Cependant, cette mise en position fermée de la première vanne 19 peut également être effectuée manuellement par un opérateur suite à l'émission d'une alarme visuelle et/ou sonore consécutive à la détection de la baisse du niveau du liquide de lubrification en dessous de la hauteur limite.

La première pompe 11 peut être arrêtée en coupant son alimentation électrique lorsque cette première pompe 11 est une pompe électrique. La première pompe peut également être arrêtée par l'intermédiaire d'un moyen d'embrayage lorsque cette première pompe 11 est une pompe mécanique entrainée par une boîte de transmission qui peut être le système mécanique 3.

Il est également possible selon un premier mode d'arrêt spécifique, pour le premier mode de réalisation du dispositif de lubrification 1 à double circuit, d'arrêter la circulation du liquide de lubrification dans le premier circuit de lubrification 10 en arrêtant directement la première pompe 11. Il est également possible selon un second mode d'arrêt spécifique, mais uniquement pour la seconde variante de ce premier mode de réalisation, de mettre la première vanne 19 en seconde position fermée. Ces modes d'arrêt spécifiques permettent d'éviter des rétablissements et arrêts intempestifs de la circulation du liquide de lubrification dans le premier circuit de lubrification 10, suite par exemple à une agitation du liquide de lubrification dans le réservoir 2 qui peut être consécutive à des changements d'assiette d'un aéronef équipé de ce système mécanique 3.

Au cours d'une quatrième étape 54, on mesure la pression du liquide de lubrification dans le second circuit de lubrification 20 par l'intermédiaire du second capteur de pression 22.

Au cours d'une cinquième étape 55, on détecte la présence ou non d'une chute de la pression du liquide de lubrification dans le second circuit de lubrification 20. La pression du liquide de lubrification dans le second circuit de lubrification 20 peut chuter soit suite à une fuite importante directement sur ce second circuit de lubrification 20 ou bien suite à une baisse du niveau du liquide de lubrification dans le réservoir 2 en dessous du second point d'aspiration 27.

Si on ne détecte aucune chute de la pression du liquide de lubrification dans le second circuit de lubrification 20, on bascule vers une sixième étape 56. On peut alors conclure que la défaillance du dispositif de lubrification provient probablement du premier circuit de lubrification 10 qui doit contenir une fuite. Cette sixième étape 56 met alors fin au procédé, une première alarme sous la forme d'un premier signal lumineux et/ou sonore, informant un opérateur que le premier circuit de lubrification 10 comporte probablement une fuite, peut alors être envoyée.

Si on détecte une chute de la pression du liquide de lubrification dans le second circuit de lubrification 20, on continue le procédé vers des étapes supplémentaires. Cette chute de la pression du liquide de lubrification dans le second circuit de lubrification 20 confirme probablement la présence d'une fuite sur ce second circuit de lubrification 20.

Au cours d'une septième étape 57, on rétablit la circulation du liquide de lubrification dans le premier circuit de lubrification 10 afin de permettre la lubrification du système mécanique 3.

Pour les première et seconde variantes qui comportent deux premiers points d'aspiration 16,17, la première vanne 19 doit être basculée sur la troisième position permettant de relier la première pompe 11 au premier point bas d'aspiration 17. Cette mise en troisième position de la première vanne 19 est pilotée par la détection de la chute de la pression du liquide de lubrification dans le second circuit de lubrification 20.

Pour la troisième variante, le premier point d'aspiration 16 mobile doit être abaissé en dessous du niveau du liquide de lubrification pour permettre à la première pompe de puiser le liquide de lubrification dans le réservoir 2 et d'alimenter ainsi le premier circuit de lubrification 10. Ce premier point d'aspiration 16 mobile doit être abaissé au moins en dessous de la position intermédiaire B et de préférence à la position basse C.

De plus, pour ces trois variantes, si la première pompe 11 a été arrêtée au cours de la troisième étape 53, il est nécessaire de remettre en marche cette première pompe 11.

Au cours d'une huitième étape 58, on arrête la circulation du liquide de lubrification dans le second circuit de lubrification 20. Le liquide de lubrification se trouvant en dessous du second point d'aspiration 27 dans le réservoir 2, la seconde pompe 21 ne permet plus d'alimenter le second circuit de lubrification 20. En conséquence, la circulation du liquide de lubrification est donc arrêtée dans ce second circuit de lubrification 20.

Par contre, il est également possible selon le premier mode d'arrêt spécifique d'arrêter la circulation du liquide de lubrification dans le second circuit de lubrification 20 en arrêtant directement la seconde pompe 21. Il est également possible selon le second mode d'arrêt spécifique de mettre la seconde vanne 19 en position fermée afin de couper la circulation du liquide de lubrification dans le second circuit de lubrification 20. Cette mise en position fermée de la seconde vanne 29 est pilotée par la détection de la chute de la pression du liquide de lubrification dans le second circuit de lubrification 20.

Les septième et huitième étapes peuvent être réalisées de façon séquentielle ou bien de façon simultanée. Cependant, la septième étape est réalisée de préférence avant la huitième étape afin de limiter au minimum la durée pendant laquelle aucune lubrification du système mécanique 3 n'est assurée.

Au cours d'une neuvième étape 59, on mesure la pression du liquide de lubrification dans le premier circuit de lubrification 10 par l'intermédiaire du premier capteur de pression 12 afin de vérifier qu'aucune fuite n'est également présente sur le premier circuit de lubrification 10.

Au cours d'une dixième étape 60, on détecte la présence ou non d'une chute de la pression du liquide de lubrification dans le premier circuit de lubrification 10. La pression du liquide de lubrification dans le premier circuit de lubrification 10 peut chuter soit suite à une fuite importante directement sur ce premier circuit de lubrification 10 ou bien suite à une baisse du niveau du liquide de lubrification dans le réservoir 2 en dessous du premier point bas d'aspiration 17.

Si on ne détecte aucune chute de la pression du liquide de lubrification dans le premier circuit de lubrification 10, on bascule vers une onzième étape 61. On peut alors conclure que la défaillance du dispositif de lubrification provient bien du second circuit de lubrification 20 qui doit contenir une fuite. Cette onzième étape 61 met alors fin au procédé, une seconde alarme sous la forme d'un second signal lumineux et/ou sonore, informant un opérateur que le second circuit de lubrification 20 comporte probablement une fuite, peut alors être envoyée.

Si on détecte une chute de la pression du liquide de lubrification dans le premier circuit de lubrification 10, on bascule vers une douzième étape 62. Cette chute de la pression du liquide de lubrification dans le premier circuit de lubrification 10 met en évidence la présence d'une fuite également sur ce premier circuit de lubrification 10 ou bien plus probablement que la fuite se trouve en fait directement sur le réservoir 2. Cette douzième étape 62 met également fin au procédé, une troisième alarme sous la forme d'un troisième signal lumineux et/ou sonore, informant un opérateur que l'ensemble du dispositif de lubrification 1 à double circuit est défaillant, peut alors être envoyée.

Dans ce cas, aucune lubrification du système mécanique 3 n'est assurée par les circuits de lubrification 10 et 20.

Ce dispositif de lubrification 1 à double circuit permet ainsi de proposer un système de lubrification d'un système mécanique 3 à fiabilité augmentée, sans l'utilisation d'un circuit de secours, ni de plusieurs réservoirs de liquide de lubrification. De plus, ce dispositif de lubrification 1 à double circuit permet d'assurer en permanence un refroidissement du liquide de lubrification et n'a pas de limitation de la durée de lubrification suite à la détection d'une fuite.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé de lubrification à double circuit d'un système mécanique (3), ledit système mécanique (3) comportant un réservoir (2) dans lequel est situé un liquide de lubrification,
au cours duquel, on lubrifie simultanément ledit système mécanique (3) par l'intermédiaire d'un premier circuit de lubrification (10) et d'un second circuit de lubrification (20) par ledit liquide de lubrification,
**caractérisé en ce que**, ledit second circuit de lubrification (20) comportant un second point d'aspiration (27) situé en dessous d'une hauteur limite dans ledit réservoir (2), le premier circuit de lubrification (10) comportant au moins un premier point d'aspiration (16,17) pouvant se situer en dessous dudit second point d'aspiration (27),
- lorsque l'on détecte une baisse du niveau dudit liquide de lubrification dans ledit réservoir (2) en dessous de ladite hauteur limite, on arrête la circulation dudit liquide de lubrification dans ledit premier circuit de lubrification (10),
- puis on mesure la pression dudit liquide de lubrification dans ledit second circuit de lubrification (20), et
- lorsque l'on détecte une chute de ladite pression dudit liquide de lubrification dans ledit second circuit de lubrification (20), on rétablit la circulation dudit liquide de lubrification dans ledit premier circuit de lubrification (10), un premier point d'aspiration (16,17) étant situé en dessous dudit second point d'aspiration (27), et on arrête la circulation dudit liquide de lubrification dans ledit second circuit de lubrification (20).

2. Procédé de lubrification selon la revendication 1, **caractérisé en ce que**, ledit premier circuit de lubrification (10) comportant une première vanne (19), on pilote ladite première vanne (19) par ladite baisse dudit niveau dudit liquide de lubrification dans ledit réservoir (2) en dessous de ladite hauteur limite et on arrête ladite circulation dudit liquide de lubrification dans ledit premier circuit de lubrification (10) par l'intermédiaire de ladite première vanne (19).

3. Procédé de lubrification selon l'une quelconque des revendications 1 à 2,
**caractérisé en ce que** ledit premier circuit de lubrification (10) comportant une première vanne (19), on pilote ladite première vanne (19) par une détection d'une chute de la pression dudit liquide de lubrification dans ledit second circuit de lubrification (20) et on rétablit ladite circulation dudit liquide de lubrification dans ledit premier circuit de lubrification (10) par l'intermédiaire de ladite première vanne (19).

4. Procédé de lubrification selon la revendication 1,
**caractérisé en ce que**, ledit premier circuit de lubrification (10) comportant une première pompe (11), on arrête ladite circulation dudit liquide de lubrification dans ledit premier circuit de lubrification (10) en arrêtant ladite première pompe (11) et on rétablit ladite circulation dudit liquide de lubrification dans ledit premier circuit de lubrification (10) en remettant en marche ladite première pompe (11).

5. Procédé de lubrification selon l'une quelconque des revendications 1 à 4,
**caractérisé en ce que**, ledit second circuit de lubrification (20) comportant une seconde pompe (21), on arrête ladite circulation dudit liquide de lubrification dans ledit second circuit de lubrification (20) en arrêtant ladite seconde pompe (21).

6. Procédé de lubrification selon l'une quelconque des revendications 1 à 4,
**caractérisé en ce que** ledit second circuit de lubrification (20) comportant une seconde vanne (29), on pilote ladite seconde vanne (29) par une détection d'une chute de la pression dudit liquide de lubrification dans ledit second circuit de lubrification (20) et on arrête ladite circulation dudit liquide de lubrification dans ledit second circuit de lubrification (20) par l'intermédiaire de ladite seconde vanne (29).

7. Procédé de lubrification selon l'une quelconque des revendications 1 à 6,
**caractérisé en ce que** l'on détecte ladite baisse dudit niveau dudit liquide de lubrification en dessous de ladite hauteur limite dans ledit réservoir (2) en détectant une chute de ladite pression dudit liquide de lubrification dans ledit premier circuit de lubrification (10).

8. Procédé de lubrification selon l'une quelconque des revendications 1 à 6,
**caractérisé en ce que** l'on détecte ladite baisse dudit niveau dudit liquide de lubrification en dessous de ladite hauteur limite dans ledit réservoir (2) par l'intermédiaire d'un capteur de présence de liquide (18) situé dans ledit réservoir (2) au niveau de ladite hauteur limite.

9. Procédé de lubrification selon l'une quelconque des revendications 1 à 8,
**caractérisé en ce que**, après avoir détecté ladite chute de ladite pression dudit liquide de lubrification dans ledit second circuit de lubrification (20), on distribue ledit liquide de lubrification dans ledit premier circuit de lubrification (10) par l'intermédiaire d'un premier point d'aspiration (17) situé dans ledit réservoir (2) en dessous de ladite hauteur limite.

10. Procédé de lubrification selon l'une quelconque des revendications 1 à 9,
**caractérisé en ce que**, après avoir rétabli ladite circulation dudit liquide de lubrification dans ledit premier circuit de lubrification (10), on mesure la pression dudit liquide de lubrification dans ledit premier circuit de lubrification (10).

11. Dispositif de lubrification (1) à double circuit d'un système mécanique (3), ledit dispositif de lubrification (1) étant muni d'un réservoir (2) et de deux circuits de lubrification (10,20), ledit réservoir (2) contenant un liquide de lubrification, un premier circuit de lubrification (10) comportant une première pompe (11), des premières conduites, un premier capteur de pression (12), des premiers gicleurs (14) et au moins un premier point d'aspiration (16,17) dudit liquide de lubrification, chaque premier point d'aspiration (16,17) étant situé dans ledit réservoir (2), un second circuit de lubrification (20) comportant une seconde pompe (21), des secondes conduites, un second capteur de pression (22), des seconds gicleurs (24) et un second point d'aspiration (27) dudit liquide de lubrification, ledit second point d'aspiration (27) étant situé dans ledit réservoir (2), chaque pompe (11,21) distribuant par l'intermédiaire desdits premier et second point d'aspiration (16,17,27) ledit liquide de lubrification respectivement dans lesdites premières et secondes conduites, puis dans lesdits premiers et seconds gicleurs (14,24) afin de lubrifier ledit système mécanique (3),
**caractérisé en ce que**, ledit dispositif de lubrification (1) à double circuit comporte un moyen de détection de passage en dessous de ladite hauteur limite dudit liquide de lubrification dans ledit réservoir (2), ledit second point d'aspiration (27) étant situé en dessous de ladite hauteur limite, ledit dispositif de lubrification (1) mettant en oeuvre le procédé de lubrification selon l'une quelconque des revendications 1 à 10.

12. Dispositif de lubrification (1) selon la revendication 11,
**caractérisé en ce que** ledit premier circuit de lubrification (10) comporte deux premiers points d'aspiration (16,17) et une première vanne (19) reliant ladite première pompe (11) avec lesdits deux premiers points d'aspiration (16,17), ledit moyen de détection étant formé par un premier point haut d'aspiration (16) et ledit premier capteur de pression (12), ledit premier point haut d'aspiration (16) étant situé au niveau de ladite hauteur limite et un premier point bas d'aspiration (17) étant à une position basse située en dessous dudit second point d'aspiration (27).

13. Dispositif de lubrification (1) selon la revendication 12,
**caractérisé en ce que** ladite première vanne (19) est une vanne à deux positions mettant en liaison ladite première pompe (11) avec l'un ou l'autre desdits premiers points d'aspiration (16,17), ladite première vanne (19) étant pilotée par ledit second capteur de pression (22).

14. Dispositif de lubrification (1) selon la revendication 12,
**caractérisé en ce que** ladite première vanne (19) est une vanne à trois positions permettant une circulation dudit liquide de lubrification entre ladite première pompe (11) et l'un ou l'autre desdits premiers points d'aspiration (16,17) afin que ledit liquide de lubrification circule dans ledit premier circuit de lubrification (10) ou bien coupant ladite circulation du liquide de lubrification dans ledit premier circuit de lubrification (10), ladite première vanne (19) étant pilotée par ledit premier capteur de pression (12) et ledit second capteur de pression (22).

15. Dispositif de lubrification (1) selon la revendication 11,
**caractérisé en ce que** ledit premier circuit de lubrification (10) comporte un seul premier point d'aspiration (16) mobile, ledit moyen de détection étant formé par ledit premier point d'aspiration (16) et ledit premier capteur de pression (12), ledit premier point d'aspiration (16) étant mobile dans ledit réservoir (2) entre ladite hauteur limite et une position basse située en dessous dudit second point d'aspiration (27).

16. Dispositif de lubrification (1) selon la revendication 11,
**caractérisé en ce que** ledit premier circuit de lubrification (10) comporte un seul premier point d'aspiration (16) et un capteur de présence de liquide (18), ledit moyen de détection étant formé par ledit capteur de présence de liquide (18) positionné dans ledit réservoir (2) au niveau de ladite hauteur limite, ledit premier point d'aspiration (16) étant situé au niveau d'une position basse en dessous dudit second point d'aspiration (27).

17. Dispositif de lubrification (1) selon la revendication 16,
**caractérisé en ce que** ledit premier circuit de lubrification (10) comporte une première vanne (19) à deux positions permettant une circulation dudit liquide de lubrification entre ladite première pompe (11) et ledit premier point d'aspiration (16) puis dans ledit premier circuit de lubrification (10) ou bien coupant ladite circulation dudit liquide de lubrification dans ledit premier circuit de lubrification (10), ladite première vanne (19) étant pilotée par ledit capteur de présence de liquide (18).

18. Dispositif de lubrification (1) selon l'une quelconque des revendications 11 à 17,
**caractérisé en ce que** ledit second circuit de lubrification (20) comporte une seconde vanne (29) à deux positions permettant une circulation dudit liquide de lubrification entre ladite seconde pompe (21) et ledit second point d'aspiration (27) puis dans ledit second circuit de lubrification (20) ou bien coupant ladite circulation dudit liquide de lubrification dans ledit second circuit de lubrification (20), ladite seconde vanne (29) étant pilotée par ledit second capteur de pression (22).

19. Dispositif de lubrification (1) selon l'une quelconque des revendications 11 à 18,
**caractérisé en ce que** ledit système mécanique (3) est une boîte de transmission principale de puissance d'un aéronef à voilure tournante.

20. Boîte de transmission principale de puissance destinée à un aéronef à voilure tournante,
**caractérisée en ce que** ladite boîte de transmission principale de puissance est munie d'un dispositif de lubrification (1) selon la revendication 19, ledit réservoir (2) étant constitué par un carter de ladite boîte de transmission principale de puissance.

## Patentansprüche

1. Verfahren zur Schmierung mit Doppelkreislauf eines mechanischen Systems (3), wobei das mechanische System (3) einen Tank (2) aufweist, in dem sich eine Schmierflüssigkeit befindet,
bei dem gleichzeitig das mechanische System (3) über einen ersten Schmierkreislauf (10) und über einen zweiten Schmierkreislauf (20) mit der Schmierflüssigkeit geschmiert wird,
**dadurch gekennzeichnet, dass** der zweite Schmierkreislauf (20) eine zweite Ansaugstelle (27) aufweist, die unterhalb einer Grenzhöhe in dem Tank (2) liegt, wobei der erste Schmierkreislauf (10) mindestens eine erste Ansaugstelle (16, 17) aufweist, die unterhalb der zweiten Ansaugstelle (27) gelegen sein kann,
- wenn ein Sinken des Pegels der Schmierflüssigkeit in dem Tank (2) unterhalb der Grenzhöhe erfasst wird, die Zirkulation der Schmierflüssigkeit in dem ersten Schmierkreislauf (10) gestoppt wird,
- dann der Druck der Schmierflüssigkeit in dem zweiten Schmierkreislauf (20) gemessen wird, und
- wenn ein Druckabfall der Schmierflüssigkeit in dem zweiten Schmierkreislauf (20) erfasst wird, die Zirkulation der Schmierflüssigkeit in dem ersten Schmierkreislauf (10) wiederhergestellt wird, wobei eine erste Ansaugstelle (16, 17) unterhalb der zweiten Ansaugstelle (27) angeordnet ist, und die Zirkulation der Schmierflüssigkeit in dem zweiten Schmierkreislauf (20) gestoppt wird.

2. Schmierverfahren nach Anspruch 1,
**dadurch gekennzeichnet, dass** der erste Schmierkreislauf (10) ein erstes Ventil (19) aufweist, wobei das erste Ventil (19) durch das Sinken des Pegels der Schmierflüssigkeit in dem Tank (22) unterhalb der Grenzhöhe gesteuert wird, und die Zirkulation der Schmierflüssigkeit in dem ersten Schmierkreislauf (10) durch das erste Ventil (19) gestoppt wird.

3. Schmierverfahren nach einem der Ansprüche 1 bis 2,
**dadurch gekennzeichnet, dass** der erste Schmierkreislauf (10) ein erstes Ventil (19) aufweist, wobei das erste Ventil (19) durch die Erfassung eines Druckabfalls der Schmierflüssigkeit in dem zweiten Schmierkreislauf (20) gesteuert wird, und die Zirkulation der Schmierflüssigkeit in dem ersten Schmierkreislauf (10) über das erste Ventil (19) wiederhergestellt wird.

4. Schmierverfahren nach Anspruch 1,
**dadurch gekennzeichnet, dass** der erste Schmierkreislauf (10) eine erste Pumpe (11) aufweist, die Zirkulation der Schmierflüssigkeit in dem ersten Schmierkreislauf (10) gestoppt wird, indem die erste Pumpe (11) angehalten wird und die Zirkulation der Schmierflüssigkeit in dem ersten Schmierkreislauf (10) wiederhergestellt wird, indem die erste Pumpe (11) wieder angeschaltet wird.

5. Schmierverfahren nach einem der Ansprüche 1 bis 4,
**dadurch gekennzeichnet, dass** der zweite Schmierkreislauf (20) eine zweite Pumpe (21) aufweist, wobei die Zirkulation der Schmierflüssigkeit in dem zweiten Schmierkreislauf (20) gestoppt wird, indem die zweite Pumpe (21) angehalten wird.

6. Schmierverfahren nach einem der Ansprüche 1 bis 4,
**dadurch gekennzeichnet, dass** der zweite Schmierkreislauf (20) ein zweites Ventil (29) aufweist, das zweite Ventil (29) durch die Erfassung eines Druckabfalls der Schmierflüssigkeit in dem zweiten Schmierkreislauf (20) gesteuert wird und die Zirkulation der Schmierflüssigkeit in dem zweiten Schmierkreislauf (20) über das zweite Ventil (2) gestoppt wird.

7. Schmierverfahren nach einem der Ansprüche 1 bis 6,
**dadurch gekennzeichnet, dass** das Sinken des Pegels der Schmierflüssigkeit unterhalb der Grenzhöhe in dem Tank (2) erfasst wird, indem ein Druckabfall der Schmierflüssigkeit in dem ersten Schmierkreislauf (10) erfasst wird.

8. Schmierverfahren nach einem der Ansprüche 1 bis 6,
**dadurch gekennzeichnet, dass** das Sinken des Pegels der Schmierflüssigkeit unter die Grenzhöhe in dem Tank (2) durch einen Sensor zur Erfassung der Anwesenheit von Flüssigkeit (18) erfasst wird, der in dem Tank (2) auf der Höhe der Grenzhöhe angeordnet ist.

9. Schmierverfahren nach einem der Ansprüche 1 bis 8,
**dadurch gekennzeichnet, dass**, nachdem der Druckabfall der Schmierflüssigkeit in dem zweiten Schmierkreislauf (20) erfasst wurde, die Schmierflüssigkeit in dem ersten Schmierkreislauf (10) mittels einer ersten Ansaugstelle (17) verteilt wird, die in dem Tank (2) unterhalb der Grenzhöhe angeordnet ist.

10. Schmierverfahren nach einem der Ansprüche 1 bis 9,
**dadurch gekennzeichnet, dass**, nachdem die Zirkulation der Schmierflüssigkeit in dem ersten Schmierkreislauf (10) wiederhergestellt ist, der Druck der Schmierflüssigkeit in dem ersten Schmierkreislauf (10) gemessen wird.

11. Schmiervorrichtung (1) mit Doppelkreislauf für ein mechanisches System (3), wobei die Schmiervorrichtung (1) mit einem Tank (2) und zwei Schmierkreisläufen (10, 20) versehen ist, wobei der Tank (2) eine Schmierflüssigkeit, einen ersten Schmierkreislauf (10) mit einer ersten Pumpe (11), erste Leitungen, einen ersten Drucksensor (12), erste Spritzdüsen (14) und mindestens eine erste Ansaugstelle (16, 17) der Schmierflüssigkeit aufweist, wobei jede erste Ansaugstelle (16, 17) in dem Tank (2) angeordnet ist, wobei ein zweiter Schmierkreislauf (20) eine zweite Pumpe (21), zweite Leitungen, einen zweiten Drucksensor (22), zweite Spritzdüsen (24), und eine zweite Ansaugstelle (27) für die Schmierflüssigkeit aufweist, wobei die zweite Ansaugstelle (27) in dem Tank (2) angeordnet ist, wobei jede Pumpe (11, 21) über die erste und die zweite Ansaugstelle (16, 17, 27) die Schmierflüssigkeit jeweils in den ersten und zweiten Leitungen und dann in die ersten und zweiten Sprühdüsen (14, 24) verteilen, um das mechanische System (3) zu schmieren, **dadurch gekennzeichnet, dass** die Schmiervorrichtung (1) mit Doppelkreislauf ein Mittel zur Erfassung des Sinkens der Schmierflüssigkeit unter die Grenzhöhe in dem Tank (2) aufureist, wobei die zweite Ansaugstelle (27) unterhalb der Grenzhöhe gelegen ist, wobei die Schmiervorrichtung (1) das Schmierverfahren nach einem der Ansprüche 1 bis 10 ausführt.

12. Schmiervorrichtung (1) nach Anspruch 11,
dadurch gekenntzeichnet, dass der erste Schmierkreislauf (10) zwei erste Ansaugstellen (16, 17) und ein erstes Ventil (19), das die erste Pumpe (11) mit den zwei ersten Ansaugstellen (16, 17) verbindet, aufweist, wobei das Erfassungsmittel gebildet wird von einer ersten hohen Ansaugstelle (16) und dem ersten Drucksensor (12), wobei die erste hohe Ansaugstelle (16) auf der Höhe der Grenzhöhe angeordnet ist und eine erste niedrige Ansaugstelle (17) in einer niedrigen Position unterhalb der zweiten Ansaugstelle (17) angeordnet ist.

13. Schmiervorrichtung (1) nach Anspruch 12,
**dadurch gekennzeichnet, dass** das erste Ventil (19) ein Zwei-Stellungs-Ventil ist, welches die erste Pumpe (11) mit der einen oder der anderen der ersten Ansaugstellen (16, 17) verbindet, wobei das erste Ventil (19) durch den zweiten Drucksensor (22) gesteuert wird.

14. Schmiervorrichtung (1) nach Anspruch 12,
**dadurch gekennzeichnet, dass** das erste Ventil (19) ein Drei-Stellungs-Ventil ist, welches eine Zirkulation der Schmierflüssigkeit zwischen der ersten Pumpe (11) und der einen oder der anderen der ersten Ansaugstellen (16, 17) ermöglicht, damit die Schmierflüssigkeit in dem ersten Schmierkreislauf (10) zirkuliert oder damit die Schmierflüssigkeitszirkulation in dem ersten Schmierkreislauf (10) stoppt, wobei das erste Ventil (19) von dem ersten Drucksensor (12) und dem zweiten Drucksensor (22) gesteuert wird.

15. Schmiervorrichtung (1) nach Anspruch 11,
**dadurch gekennzeichnet, dass** der erste Schmierkreislauf (10) eine einzige erste bewegliche Ansaugstelle (16) aufweist, wobei das Erfassungsmittel von der ersten Ansaugstelle (16) und dem ersten Drucksensor (12) gebildet wird, wobei die erste Ansaugstelle (16) in dem Tank (2) zwischen der Grenzhöhe und einer niedrigen Position beweglich ist, die unterhalb der zweiten Ansaugstelle (27) liegt.

16. Schmiervorrichtung (1) nach Anspruch 11,
**dadurch gekennzeichnet, dass** der erste Schmierkreislauf (10) eine einzige Ansaugstelle (16) und einen Sensor zur Erfassung von Flüssigkeit (18) aufweist, wobei das Erfassungsmittel von dem Sensor zur Erfassung von Flüssigkeit (18), der in dem Tank (2) auf der Höhe der Grenzhöhe angeordnet ist, gebildet wird, wobei die erste Ansaugstelle (16) auf der Höhe einer niedrigen Position unterhalb der zweiten Ansaugstelle (27) angeordnet ist.

17. Schmiervorrichtung (1) nach Anspruch 16,
**dadurch gekennzeichnet, dass** der erste Schmierkreislauf (10) ein erstes Zwei-Stellungs-Ventil (19) aufweist, das eine Zirkulation der Schmierflüssigkeit zwischen der ersten Pumpe (11) und der ersten Ansaugstelle (16) und dann in dem ersten Schmierkreislauf (10) ermöglicht oder die Zirkulation der Schmierflüssigkeit in dem ersten Schmierkreislauf (10) stoppt, wobei das erste Ventil (19) von dem Sensor zur Erfassung von Flüssigkeit (18) gesteuert wird.

18. Schmiervorrichtung (1) nach einem der Ansprüche 11 bis 17,
**dadurch gekennzeichnet, dass** der zweite Schmierkreislauf (20) ein zweites Zwei-Stellungs-Ventil (29) aufweist, welches eine Zirkulation der Schmierflüssigkeit zwischen der zweiten Pumpe (21) und der zweiten Ansaugstelle (27) und dann in dem zweiten Schmierkreislauf (20) erlaubt oder die Zirkulation der Schmierflüssigkeit in dem zweiten Schmierkreislauf (20) stoppt, wobei das zweite Ventil (29) von dem zweiten Drucksensor (22) gesteuert wird.

19. Schmiervorrichtung (1) nach einem der Ansprüche 11 bis 18,
**dadurch gekennzeichnet, dass** das mechanische System (3) ein Hauptleistungsgetriebe eines Drehflügelflugzeugs ist.

20. Hauptleistungsgetriebe für ein Drehflügelflugzeug,
**dadurch gekennzeichnet, dass** das Hauptleistungsgetriebe mit einer Schmiervorrichtung (1) nach Anspruch 19 versehen ist, wobei der Tank (2) durch eine Wanne des Hauptleistungsgetriebes gebildet wird.

## Claims

1. Dual-circuit lubrication method for lubricating a mechanical system (3), said mechanical system (3) comprising a tank (2) containing a lubrication liquid,
during which method said mechanical system (3) is lubricated simultaneously by means of a first lubrication circuit (10) and a second lubrication circuit (20) using the lubrication liquid,
**characterised in that**, said second lubrication circuit (20) comprising a second suction point (27) located below a limit height in the tank (2), the first lubrication circuit (10) comprising at least one first suction point (16, 17) that can be located below the second suction point (27),
- when a fall in the level of the lubrication liquid in the tank (2) to below the limit height is detected, the flow of the lubrication liquid in the first lubrication circuit (10) is stopped,
- the pressure of the lubrication liquid in the second lubrication circuit (20) is then measured, and
- when a drop in the pressure of the lubrication liquid in the second lubrication circuit (20) is detected, the flow of the lubrication liquid in the first lubrication circuit (10) is re-established, a first suction point (16, 17) being located below said second suction point (27), and the flow of the lubrication liquid in the second lubrication circuit (20) is stopped.

2. Lubrication method according to claim 1,
**characterised in that**, said first lubrication circuit (10) comprising a first valve (19), the first valve (19) is operated by the fall in the level of the lubrication liquid in the tank (2) below the limit height, and the flow of the lubrication liquid in the first lubrication circuit (10) is stopped by means of the first valve (19).

3. Lubrication method according to either of claims 1 to 2,
**characterised in that**, said first lubrication circuit (10) comprising a first valve (19), the first valve (19) is operated by a detection of a drop in the pressure of the lubrication liquid in the second lubrication circuit (20), and the flow of the lubrication liquid in the first lubrication circuit (10) is re-established by means of the first valve (19).

4. Lubrication method according to claim 1,
**characterised in that**, said first lubrication circuit (10) comprising a first pump (11), the flow of the lubrication liquid in the first lubrication circuit (10) is stopped by stopping the first pump (11), and the flow of the lubrication liquid in the first lubrication circuit (10) is re-established by restarting the first pump (11).

5. Lubrication method according to any of claims 1 to 4,
**characterised in that**, said second lubrication circuit (20) comprising a second pump (21), the flow of the lubrication liquid in the second lubrication circuit (20) is stopped by stopping the second pump (21).

6. Lubrication method according to any of claims 1 to 4,
**characterised in that**, said second lubrication circuit (20) comprising a second valve (29), the second valve (29) is operated by a detection of a drop in the pressure of the lubrication liquid in the second lubrication circuit (20), and the flow of the lubrication liquid in the second lubrication circuit (20) is stopped by means of the second valve (29).

7. Lubrication method according to any of claims 1 to 6,
**characterised in that** the fall in the level of the lubrication liquid to below the limit height in the tank (2) is detected by detecting a drop in the pressure of the lubrication liquid in the first lubrication circuit (10).

8. Lubrication method according to any of claims 1 to 6,
**characterised in that** the fall in the level of the lubrication liquid to below the limit height in the tank (2) is detected by means of a liquid sensor (18) located in the tank (2) at the level of the limit height.

9. Lubrication method according to any of claims 1 to 8,
**characterised in that**, after detecting the drop in the pressure of the lubrication liquid in the second lubrication circuit (20), the lubrication liquid is fed into the first lubrication circuit (10) via a first suction point (17) located in the tank (2) below the limit height.

10. Lubrication method according to any of claims 1 to 9,
**characterised in that**, after re-establishing the flow of the lubrication liquid in the first lubrication circuit (10), the pressure of the lubrication liquid in the first lubrication circuit (10) is measured.

11. Dual-circuit lubrication device (1) for lubricating a mechanical system (3), said lubrication device (1) being provided with a tank (2) and two lubrication circuits (10, 20), the tank (2) containing a lubrication liquid, a first lubrication circuit (10) comprising a first pump (11), first pipes, a first pressure sensor (12), first nozzles (14) and at least one first suction point (16, 17) for suctioning the lubrication liquid, each first suction point (16, 17) being located in the tank (2), a second lubrication circuit (20) comprising a second pump (21), second pipes, a second pressure sensor (22), second nozzles (24) and a second suction point (27) for suctioning the lubrication liquid, the second suction point (27) being located in the tank (2), each pump (11, 21) feeding the lubrication liquid via the first and second suction points (16, 17, 27) into the first and second pipes, respectively, and then into the first and second nozzles (14, 24) in order to lubricate the mechanical system (3),
**characterised in that** said dual-circuit lubrication device (1) comprises a detection means for detecting that the lubrication liquid has fallen below the limit height in the tank (2), the second suction point (27) being located below the limit height, the lubrication device (1) implementing the lubrication method according to any of claims 1 to 10.

12. Lubrication device (1) according to claim 11,
**characterised in that** the first lubrication circuit (10) has two first suction points (16, 17) and a first valve (19) connecting the first pump (11) to the two first suction points (16, 17), the detection means being formed by a high first suction point (16) and the first pressure sensor (12), the high first suction point (16) being located at the level of the limit height, and a low first suction point (17) being located at a low position located below the second suction point (27).

13. Lubrication device (1) according to claim 12,
**characterised in that** the first valve (19) is a two-position valve that connects the first pump (11) to one or the other of the first suction points (16, 17), the first valve (19) being operated by the second pressure sensor (22).

14. Lubrication device (1) according to claim 12,
**characterised in that** the first valve (19) is a three-position valve that allows the lubrication liquid to flow between the first pump (11) and one or the other of the first suction points (16, 17) in order for the lubrication liquid to flow into the first lubrication circuit (10), or else interrupts the flow of the lubrication liquid in the first lubrication circuit (10), the first valve (19) being operated by the first pressure sensor (12) and the second pressure sensor (22).

15. Lubrication device (1) according to claim 11,
**characterised in that** the first lubrication circuit (10) comprises a single movable first suction point (16), the detection means being formed by the first suction point (16) and the first pressure sensor (12), the first suction point (16) being movable in the tank (2) between the limit height and a low position located below the second suction point (27).

16. Lubrication device (1) according to claim 11,
**characterised in that** the first lubrication circuit (10) comprises a single first suction point (16) and a liquid sensor (18), the detection means being formed by the liquid sensor (18) positioned in the tank (2) at the level of the limit height, the first suction point (16) being located at the level of a low position below the second suction point (27).

17. Lubrication device (1) according to claim 16,
**characterised in that** the first lubrication circuit (10) comprises a two-position first valve (19) that allows the lubrication liquid to flow between the first pump (11) and the first suction point (16) and then into the first lubrication circuit (10), or else interrupts the flow of the lubrication liquid in the first lubrication circuit (10), the first valve (19) being operated by the liquid sensor (18).

18. Lubrication device (1) according to any of claims 11 to 17,
**characterised in that** the second lubrication circuit (20) comprises a two-position second valve (29) that allows the lubrication liquid to flow between the second pump (21) and the second suction point (27) and then into the second lubrication circuit (20), or else interrupts the flow of the lubrication liquid in the second lubrication circuit (20), the second valve (29) being operated by the second pressure sensor (22).

19. Lubrication device (1) according to any of claims 11 to 18,
**characterised in that** the mechanical system (3) is a main power transmission gearbox of a rotary wing aircraft.

20. Main power transmission gearbox for a rotary wing aircraft,
**characterised in that** said main power transmission gearbox is provided with a lubrication device (1) according to claim 19, the tank (2) being formed by a casing of the main power transmission gearbox.
